# EUROPÄISCHE PATENTSCHRIFT

(11) **EP 1 730 631 B1**
(45) Veröffentlichungstag und Bekanntmachung des Hinweises auf die Patenterteilung: **10.06.2009**
(21) Anmeldenummer: 04786821.1
(22) Anmeldetag: 22.09.2004
(51) Int. Cl.: G06F 9/445

(54) **VERFAHREN ZUR BENUTZERSPEZIFISCHEN KONFIGURATION EINES COMPUTERS AUS EINER GRUPPE VON VORBEREITETEN COMPUTERN**
METHOD FOR THE USER-SPECIFIC CONFIGURATION OF A COMPUTER FROM A GROUP OF PREPARED COMPUTERS
PROCEDE DE CONFIGURATION SPECIFIQUE UTILISATEUR D'UN ORDINATEUR D'UN GROUPE D'ORDINATEURS PRESTRUCTURES

(30) Priorität: 31.03.2004 DE 102004015834
(43) Veröffentlichungstag der Anmeldung: 13.12.2006
(73) Patentinhaber: Fujitsu Siemens Computers GmbH, 80807 München (DE)
(72) Erfinder: GRUND, Berthold, 86399 Bobingen (DE); REINERSMANN, Dieter, 91334 Hemhofen (DE); SCHMIDT, Franz, 89362 Offingen (DE); TESLINSKI, Monika, Brighton VIC 3186 (AU)
(74) Vertreter: Epping, Wilhelm
(86) Internationale Anmeldenummer: PCT/DE2004/002104
(87) Internationale Veröffentlichungsnummer: WO 2005/101199

(56) Entgegenhaltungen:
- EP-A- 0 793 170
- WO-A-01/73543
- WO-A-03/052596
- "Preinstalling Microsoft Windows XP by Using the OEM Preinstallation Kit, Part I" WINDOWS PLATFORM DESIGN NOTES, 4. April 2003 (2003-04-04), XP002301441

## Beschreibung

Die Erfindung betrifft ein Verfahren zur benutzerspezifischen Konfiguration eines Computers aus einer Gruppe von vorbereiteten Computern gemäß dem Oberbegriff des Anspruchs 1.

Solche Verfahren zur benutzerspezifischen Konfiguration von Computern kommen vor allem zum Einsatz, wenn eine große Anzahl von Computern in einer Arbeitsumgebung neu eingesetzt oder ersetzt werden soll. Eine Arbeitsumgebung ist dabei beispielsweise ein Unternehmen oder eine Institution, die durchaus mehrere Standorte umfassen kann.

Die Gesamtmenge der innerhalb der Arbeitsumgebung eingesetzten Softwareprodukte wird im folgenden als Softwarepool bezeichnet. Auf den einzelnen Computer an individuellen Arbeitsplätzen innerhalb der Arbeitsumgebung ist üblicherweise nur eine Auswahl der Softwareprodukte des Softwarepools installiert. Die installierten Softwareprodukte sind darüber hinaus häufig benutzerspezifisch konfiguriert. Als Beispiel sei ein Programm zum Versenden von E-mails genannt, dem neben dem Benutzernamen die E-mail Adresse, eine Signatur und das benutzte Protokoll mitgeteilt werden müssen. Ebenfalls sind Einstellungen des Betriebssystems benutzerspezifisch vorzusehen, beispielsweise ist die Adresse des nächstgelegenen Netzwerkdruckers anzugeben oder es sind die einzubindenden Netzwerklaufwerke zu benennen.

Zur benutzerspezifischen Konfiguration von Computern innerhalb einer Arbeitsumgebung sind u.a. die folgenden drei Verfahren bekannt.

Zum Einen können neue oder zu ersetzende Computer ohne weitere Vorbereitung vor Ort aufgestellt werden. Danach erfolgt manuell und vor Ort die Installation einer Auswahl von Software aus dem Softwarepool mit Hilfe von Installationsmedien, wie beispielsweise CDs oder DVDs, gefolgt vom anschließenden Konfigurieren des Betriebssystems und der Softwareprodukte. Diese Vorgehensweise der Einzelplatzinstallation ist insbesondere bei einer größeren Anzahl von einzurichtenden Computern unpraktikabel und blockiert zudem den Arbeitsplatz vor Ort.

Eine zweite Methode besteht darin, die Computer ebenfalls ohne weitere Vorbereitung vor Ort aufzustellen, die Installation und Konfiguration dann aber über ein Netzwerk ablaufen zu lassen, wobei auch die Daten zur Installation der Softwareprodukte über das Netzwerk übertragen werden. Da Installation und Konfiguration zentral über das Netzwerk gesteuert werden, ist dieses Verfahren mit einem deutlich geringeren Personalaufwand verbunden.

Die Druckschrift US 2003/0046682 A1 beschreibt eine Netzwerkinstallation, die eine automatische Erstinstallation sowie weitere Nachinstallationen umfasst und bei der ermöglicht wird, den Fortschritt der Installation zentral zu erfassen und zu Dokumentations- und Backup-Zwecken zu hinterlegen.

Eine solche Netzwerkinstallation ist weniger fehleranfällig und ökonomischer als eine Einzelplatzinstallation. Ein Nachteil dieses Verfahrens ist, dass ein großes Datenvolumen über das Netzwerk übertragen werden muss. Gerade, wenn viele Computer gleichzeitig installiert werden sollen oder das Netzwerk nur eine geringe Übertragungsbandbreite aufweist, ist das problematisch. Beispielsweise verbietet sich diese Art der Installation für Außenstellen einer Arbeitsumgebung, die über Telefonleitungen an das Netzwerk angebunden sind.

Eine dritte Methode ist in der Druckschrift WO 01/73545 A offenbart. Gemäß dieser Methode werden Computer vorbereitet, indem ein Abbild eines magnetischen Festplattenlaufwerks eines Computers mit vorinstallierten Softwareprodukten auf die Computer übertragen wird. Nach dem Aufstellen eines der so vorbereiteten Computer am vorgesehenen Arbeitsort wird eine rechnerspezifische Konfigurationsdatei über ein Netzwerk von einem Datenbanksystem an den Computer übertragen. Danach werden die vorinstallierten Softwareprodukte auf dem Computer gemäß der Konfigurationsdatei konfiguriert. Im Gegensatz zur Netzwerkinstallation wird hierbei nach dem Aufstellen eines Computers am Arbeitsort nur ein geringes Datenvolumen übertragen, weswegen sich diese Methode auch für Netzwerke mit geringen Übertragungsbandbreiten eignet.

Eine weitere Möglichkeit ist, dass bei jedem Computer individuell vom Anbieter die entsprechenden Softwareprodukte installiert und konfiguriert werden. Der Computer wird erst danach vor Ort aufgestellt. Hier ist der Aufwand vor Ort am geringsten, dafür entstehen große logistische Probleme.beim Anbieter, da jeder Computer individuell verpackt und verschickt werden muss. Aus dem Dokument "Preinstalling Microsoft Windows XP by Using the OEM Preinstallation Kit, Part I", Windows Platform Design Notes, 2003 herausgegeben von der Firma Microsoft Corporation, ist zur Unterstützung eines solchen Verfahrens bekannt, die benutzerspezifische Anpassung eines Computers auf der Basis einer vorinstallierten und getesteten "Master Installation" durchzuführen, wodurch die die für das Testen einer benutzerspezifischen Installation benötigte Testzeit abgekürzt werden kann.

Beide zuletzt genannten Methoden bieten jedoch nur eine eingeschränkte Flexibilität, da ihnen ein Abbild mit vorinstallierten Softwareprodukten zugrunde liegt.

Der Erfindung liegt daher die Aufgabe zugrunde, ein Verfahren anzugeben, durch das eine flexible benutzerspezifische Softwareinstallation und Konfiguration eines Computersystems erreicht wird, die auch bei einer großen Zahl von Computern beziehungsweise dem Vorhandensein von Netzwerkverbindungen mit nur kleiner Bandbreite schnell und praktikabel durchgeführt werden kann.

Diese Aufgabe wird erfindungsgemäß wie im Verfahrensanspruch 1 durch ein Verfahren gelöst, bei dem
- jeder Computer der Gruppe vorbereitet wird, indem alle Installationspakete einer vorbestimmten Menge von Softwareprodukten (Softwarepool) sowie ein Konfigurationsprogramm auf den Massenspeicher des Computers übertragen werden,
- ein Datenbanksystem vorhanden ist, das benutzerspezifische Konfigurationsdateien enthält, in denen eine Unterauswahl von Softwareprodukten aus der vorbestimmten Menge benannt ist und gegebenenfalls eine Liste von Parametern angegeben ist, die zur benutzerspezifischen Konfiguration der Softwareprodukte benötigt wird.

Das Verfahren zeichnet sich dadurch aus, dass
- die benutzerspezifische Konfigurationsdatei nach dem Aufstellen des Computers an einen vorgesehenen Arbeitsort an das Konfigurationsprogramm übermittelt wird, und
- das Konfigurationsprogramm die in der Konfigurationsdatei - benannten Softwareprodukte mit Hilfe der Installationspakete von dem besagten Massenspeicher installiert und gegebenenfalls mit den angegebenen Parametern konfiguriert.

Bei Übertragen der Installationspakete während der Vorbereitung der Computer sogenannten Betankungsstationen kann eine sehr hohe Datenübertragungsrate realisiert werden. Das erfindungsgemäße Verfahren nutzt in vörteilhafterweise diese hohe Datenrate aus und kombiniert sie mit der Flexibilität einer Netzwerkinstallation. Die innerhalb einer Arbeitsumgebung insgesamt verwendete Menge von Softwareprodukten hat typischerweise einen überschaubaren Umfang. Die Datenrate, mit der während der Vorbereitung der Computer die Installationspakete auf die Massenspeicher, z.B. die Festplatten, der Computer übertragen werden kann ist mit bis zu 150 MByte/s etwa 120-mal höher als typische Netzwerkdatenraten (10 MBit/s), mehr als 10 Mal höher als die Datenraten in gebräuchlichen schnellen Netzwerken (100 MBit/s) und selbst höher als die Datenraten in den sogenannten Gigabit-Netzwerke (1000 MBit/s). Bei dem erfindungsgemäßen Verfahren wird ein größeres Datenvolumen übertragen als bei anderen Verfahren, da die Computer auch mit solchen Installationspaketen versehen werden, die hinterher bei der benutzerspezifischen Konfiguration nicht benötigt werden. Dennoch ist der zeitaufwand insgesamt geringer und fällt zudem außerhalb der eigentlichen Arbeitsumgebung an, was für den Benutzer einen zusätzlichen Vorteil darstellt.

Weitere vorteilhafte Ausgestaltungen des Verfahren ergeben sich aus den Unteransprüchen.

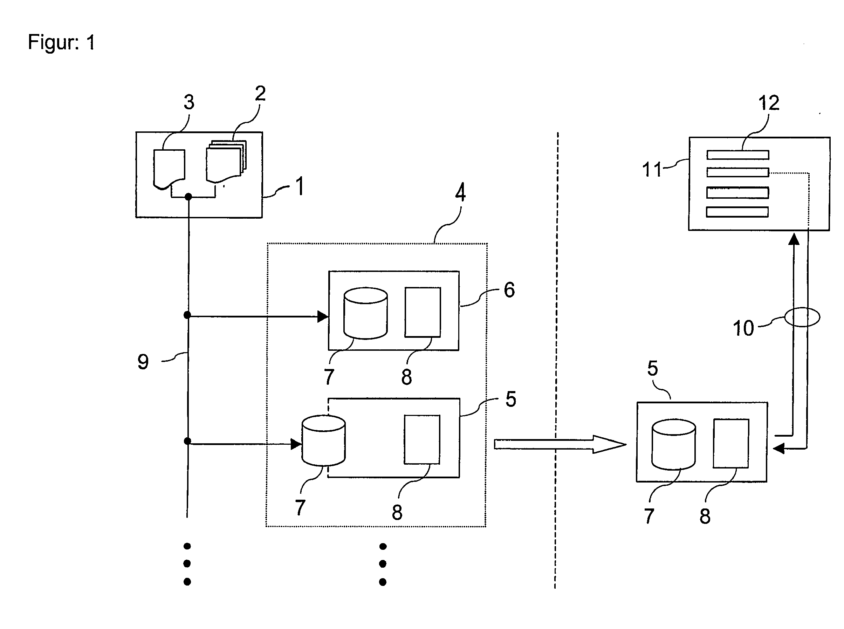

Im folgenden wird die Erfindung anhand einer Figur näher erläutert. Die Figur zeigt schematisch ein Ausführungsbeispiel des erfindungsgemäßen Verfahrens.

In der Figur ist links eine Vorbereitungsstation 1 dargestellt, die die Installationspakete 2 der vorbestimmten eine Menge an Softwareprodukten sowie ein Konfigurationsprogramm 3 aufweist. Aus einer Gruppe von Computern 4 sind exemplarisch ein Computer 5 und ein Computer 6 gezeigt, die jeweils einen Massenspeicher 7 und eine Netzwerkeinrichtung 8 aufweisen. Die Massenspeicher 7 der Computer 5 und 6 sind über eine Datenleitung mit hoher Datenrate 9 mit der Vorbereitungsstation 1 verbunden.

Auf der rechten Seite der Figur ist der Computer 5 vor Ort dargestellt, wo er mit seiner Netzwerkeinrichtung 8 über eine Netzwerkverbindung 10 mit einem Datenbanksystem 11 verbunden ist, welches Konfigurationsdateien 12 enthält.

Zur Vorbereitung der Gruppe von Computern 4 werden die Installationspakete 2 sowie das Konfigurationsprogramm 3 in der Vorbereitungsstation 1 zusammengestellt. Die Computer 5 und 6 werden dann über die Datenleitung mit hoher Datenübertragungsrate 9 an die Vorbereitungsstation 1 angeschlossen. Danach werden die Installationspakete 2 sowie das Konfigurationsprogramm 3 auf die Massenspeicher 7 der Computer 5 und 6 übertragen.

Das Anschließen der Computer 5 und 6 sowie das Übertragen der Daten kann auf verschiedene Weise geschehen. Zum Einen können, wie im Fall des Computers 6 dargestellt, externe Schnittstellen kontaktiert werden. Eine solche Schnittstelle kann zum Beispiel auch die Netzwerkeinrichtung 8 sein. Zum Anderen ist denkbar, wie im Fall des Computers 5 dargestellt, den Massenspeicher 7 kurzfristig aus dem Computer 5 zu entfernen und die dem Massenspeicher eigene Schnittstelle zur Datenübertragung zu benutzen. Solche Schnittstellen, beispielsweise SCSI (Small Computer System Interface) oder paralleles oder serielles ATA (Advanced Technology Attachment) weisen dabei die höchsten Datenraten von bis zu 133 MByte/s (paralleles ATA) oder 150 Mbyte/s (serielles ATA) auf und sind die bevorzugte Lösung. In einer weiteren Ausführungsform kann statt der Datenleitung mit hoher Datenrate 9 zwischen Vorbereitungsstation 1 und der Gruppe von Computern 4 der Datenübertrag über optische Massenspeicher und entsprechende Datenträger wie CD oder DVD erfolgen.

Die einzelnen Computer der Gruppe von Computern 4 werden nach diesem Vorbereitungsschritt an ihre Standorte innerhalb der Arbeitsumgebung gebracht. Da die Computer zu diesem Zeitpunkt noch nicht benutzerspezifisch unterschiedlich sind, ist keine Zuordnung eines Computers zu einem bestimmten Standort oder Benutzer notwendig und die Verteilung kann beliebig erfolgen.

Wie im rechten Teil der Figur gezeigt, wird die Netzwerkeinrichtung 8 des Computers 5 nach Aufstellen an seinem Standort über die Netzwerkverbindung 10 mit dem Datenbanksystem 11 verbunden. Das Konfigurationsprogramm 3 ist auf dem Massenspeicher 7 des Computers 5 enthalten und so eingerichtet, dass es beim Einschalten des Computers 5 automatisch startet. Das Konfigurationsprogramm 3 verlangt daraufhin vom Benutzer die Eingabe seiner Benutzerkennung. Diese Benutzerkennung wird über die Netzwerkeinrichtung 8 und die Netzwerkverbindung 10 dem Datenbanksystem 11 mitgeteilt. Zu jeder gültigen Benutzerkennung ist im Datenbanksystem 11 eine Konfigurationsdatei 12 abgelegt, die daraufhin über die Netzwerkverbindung 10 vom Datenbanksystem 11 an den Computer 5 und das Konfigurationsprogramm 3 zurückübermittelt wird. In der Konfigurationsdatei 12 sind die Namen der Softwareprodukte, die für den entsprechenden Benutzer gemäß seiner Benutzerkennung auf dem Computer 5 installiert werden sollen, enthalten. Darüber hinaus liegt gegebenenfalls eine Liste an Parametern vor, die zur benutzerspezifischen Konfiguration der installierten Softwareprodukte benötigt werden. Für ein Programm zu Versenden von E-Mails können das beispielsweise die E-Mail-Adresse, das benutzte Protokoll oder eine Signatur sein; für ein Textverarbeitungsprogramm können das bestimmte Textformatvorlagen sein und für ein Datenbankprogramm kann das beispielsweise die Netzwerkadresse der benutzten Datenbank sein. Die Parameterlisten können ebenfalls Einstellungen und Werte zur Konfiguration des Betriebssystems enthalten. Hier wären als Beispiel der Name und die Adresse von Netzwerklaufwerken oder Ort, Name und Adresse von Netzwerkdruckern zu nennen.

Anhand der in der Konfigurationsdatei 12 enthaltenen Informationen installiert und konfiguriert das Konfigurationsprogramm 3 daraufhin auf dem Computer 5 die Unterauswahl an Softwareprodukten unter der Zuhilfenahme der Installationspakete 2. Der Umfang der Informationen, die dazu in der Konfigurationsdatei 12 über die Netzwerkverbindung 10 übertragen werden muss, beträgt nur einen Bruchteil der Datenmenge der Installationspakete 2. Auch bei einer Netzwerkverbindung 10 mit nur geringer Datenübertragungsrate ist das Übertragen der Konfigurationsdateien 12 problemlos möglich. Dies gilt ebenso, wenn viele Computer gleichzeitig die Konfigurationsdateien 12 vom Datenbanksystem 11 abrufen.

In einer Ausführungsform des erfindungsgemäßen Verfahrens löscht das Konfigurationsprogramm 3 nach erfolgter und erfolgreicher Installation der in der Konfigurationsdatei 12 genannten Softwareprodukte alle Installationspakete 2 aus dem Massenspeicher 7 des Computers 5. Anschließend ändert das Konfigurationsprogramm 3 seine Einstellung in der Weise, dass es nicht mehr automatisch nach Einschalten des Computers 5 startet, oder löscht sich selber aus dem Massenspeicher 7 des Computers 5.

In einer anderen Ausführungsform ist das Konfigurationsprogramm 3 so ausgelegt, dass nach erfolgter Installation der in der Konfigurationsdatei 12 benannten Softwareprodukte die Installationspakete 2 nur dieser installierten Softwareprodukte aus dem Massenspeicher 7 des Computers 5 entfernt werden.

In diesem Fall kann das Konfigurationsprogramm 3 auch so ausgelegt sein, dass es bei jedem weiteren Start des Computers 5 erneut über die Netzwerkeinrichtung 8 und die Netzwerkverbindung 10 das Datenbanksystem 11 kontaktiert. Falls im Datenbanksystem 11 eine aktualisierte Version der Konfigurationsdatei 12 vorliegt, wird diese zurück an den Computer 5 und das Konfigurationsprogramm 3 übermittelt. Das Konfigurationsprogramm 3 kann dann in der neueren Version der Konfigurationsdatei 12 benannte und bislang noch nicht installierte Softwareprodukte nachinstallieren und gegebenenfalls mit angegebenen Parametern konfigurieren, beziehungsweise benannte und bereits installierte Softwareprodukte gegebenenfalls mit neuen Parametern rekonfigurieren, oder in der Konfigurationsdatei nicht benannte und bereits installierte Softwareprodukte deinstallieren. Damit ist das erfindungsgemäße Verfahren nicht nur zur ersten Installation und Konfiguration eines Computers geeignet, sondern kann auch zur Umkonfiguration des Computers eingesetzt werden.

In einer weiteren Ausführungsform kann statt der Netzwerkverbindung 10 ein tragbarer Datenträger, zum Beispiel eine Diskette oder CD, zum Übertragen der benutzerspezifischen Konfigurationsdatei 12 vom Datenbanksystem 11 zum Computer 5 benutzt werden. Innerhalb einer Arbeitsumgebung sind entsprechend auch Kombinationslösungen derart möglich, dass alle Computer, die über eine Netzwerkverbindung 10 verfügen, über diese mit der Konfigurationsdatei 12 versehen werden. Computer dagegen, zum Beispiel in Außenstellen, die keine Netzwerkverbindung aufweisen, werden über den tragbaren Datenträger mit der Konfigurationsdatei 12 versehen.

Innerhalb jeder Arbeitsumgebung wird es eine Untermenge der Menge an insgesamt eingesetzten Softwareprodukten geben, die in jeder benutzerspezifischen Installation wiederzufinden ist. Typischerweise gehören zu einer solchen Menge E-Mail Programme, Textverarbeitungsprogramme und ein Internetbrowser. In einem solchen Fall ist es möglich, diese Programme bereits im Vorbereitungsschritt auf allen Computern zu installieren. Alle anderen Softwareprodukte werden wie gehabt in Form von Installationspaketen 2 auf die Massenspeicher 7 übertragen. Das Übertragen der Daten kann in Form von einzelnen Dateien erfolgen. Ebenfalls ist möglich, ein komplettes Abbild eines Massenspeichers 7 als sogenannte Imagedatei zu übertragen.

Falls der Computer 5 einen zuvor vom Benutzer eingesetzten Computer ersetzt, besteht eine weitere Ausführungsform des erfindungsgemäßen Verfahrens darin, dass in der Konfigurationsdatei 12 auch Einstellungen des vorhergehenden Computers aufgenommen werden. Für den Fall, dass die Einstellung des vorhergehenden Computers dem Datenbanksystem 11 bespielsweise in Form von Sicherungsdateien bekannt sind, kann das Datenbanksystem 11 diese Einstellung automatisch den Konfigurationsdateien 12 hinzufügen. Einstellungen, für die ein solches Verfahren in Frage käme, wären zum Beispiel die vom Benutzer im Laufe der Zeit gesammelten Lesezeichen eines Internetbrowsers.

### Bezugszeichenliste

- 1: Vorbereitungsstation
- 2: Installationspakete
- 3: Konfigurationsprogramm
- 4: Gruppe von Computern
- 5, 6: Computer
- 7: Massenspeicher
- 8: Netzwerkeinrichtung
- 9: Datenleitung mit hoher Datenrate
- 10: Netzwerkverbindung
- 11: Datenbanksystem
- 12: Konfigurationsdatei

## Patentansprüche

1. Verfahren zur benutzerspezifischen Konfiguration eines Computers (5) aus einer Gruppe (4) von vorbereiteten Computern, wobei jeder Computer (5,6) jeweils einen Massenspeicher (7) und eine Netzwerkeinrichtung (8) aufweist, und wobei
- jeder Computer (5,6) der Gruppe (4) vorbereitet wird, indem alle Installationspakete (2) einer vorbestimmten Menge von Softwareprodukten sowie ein Konfigurationsprogramm (3) auf den Massenspeicher (7) des Computers (5,6) übertragen werden,
- ein Datenbanksystem (11) vorhanden ist, das benutzerspezifische Konfigurationsdateien (12) enthält, in denen eine Unterauswahl von Softwareprodukten aus der vorbestimmten Menge benannt ist und gegebenenfalls eine Liste von Parametern angegeben ist, die zur benutzerspezifischen Konfiguration der Softwareprodukte benötigt wird,
**dadurch gekennzeichnet, dass**
- nach dem Aufstellen des Computers (5) an einem vorgesehenen Arbeitsort eine der benutzerspezifischen Konfigurationsdateien (12) an das Konfigurationsprogramm (3) übermittelt wird und
- das Konfigurationsprogramm (3) die in der übermittelten Konfigurationsdatei (12) benannten Softwareprodukte mit Hilfe der Installationspakete (2) von dem besagten Massenspeicher (7) installiert und gegebenenfalls mit den angegebenen Parametern konfiguriert.

2. Verfahren nach Anspruch 1, **dadurch gekennzeichnet, dass**
- das Konfigurationsprogramm (3) nach seinem Start über die Netzwerkeinrichtung (8) eine Verbindung zu dem Datenbanksystem (11) aufbaut,
- das Konfigurationsprogramm (3) vom Benutzer eine Benutzerkennung erfragt und an das Datenbanksystem (11) weiterleitet, und
- das Datenbanksystem (11) daraufhin anhand der Benutzerkennung die benutzerspezifische Konfigurationsdatei (12) über die Netzwerkeinrichtung (8) an das Konfigurationsprogramm (3) übermittelt.

3. Verfahren nach Anspruch 1, **dadurch gekennzeichnet, dass**
- Die benutzerspezifische Konfigurationsdatei (12) von dem Datenbanksystem (11) auf einen tragbaren Datenträger (Diskette, CD, o.ä.) übertragen wird,
- das Konfigurationsprogramm (3) nach seinem Start vom Benutzer das Einlegen des tragbaren Datenträgers verlangt, und
- das Konfigurationsprogramm (3) die benutzerspezifische Konfigurationsdatei (12) dem tragbaren Datenträger entnimmt.

4. Verfahren nach einem der Ansprüche 1 bis 3, **dadurch gekennzeichnet, dass**
das Konfigurationsprogramm (3) des Computers (5) so eingerichtet ist, dass es automatisch nach Einschalten des Computers (5) startet.

5. Verfahren nach einem der Ansprüche 1 bis 4, **dadurch gekennzeichnet, dass**
das Konfigurationsprogramm (3) nach erfolgter Installation der in der Konfigurationsdatei (12) benannten Softwareprodukte alle Installationspakete (2) aus dem Massenspeicher (7) des Computers (5) entfernt.

6. Verfahren nach einem der Ansprüche 1 bis 4, **dadurch gekennzeichnet, dass**
das Konfigurationsprogramm (3) nach erfolgter Installation der in der Konfigurationsdatei (12) benannten Softwareprodukte die Installationspakete (2) dieser Softwareprodukte aus dem Massenspeicher (7) des Computers (5) entfernt.

7. Verfahren nach Anspruch 4, **dadurch gekennzeichnet, dass** das Konfigurationsprogramm (3) beim ersten Ausführen seine Einstellungen so ändert, dass es nicht mehr automatisch nach Einschalten des Computer (5) startet.

8. Verfahren nach einem der Ansprüche 1 bis 7, **dadurch gekennzeichnet, dass**
sich das Konfigurationsprogramm (3) nach erfolgter Installation der in der Konfigurationsdatei (12) benannten Softwareprodukte aus dem Massenspeicher (7) des Computers (5) löscht.

9. Verfahren nach einem der Ansprüche 1, 2 oder 4 bis 6,
**dadurch gekennzeichnet, dass**
- das Konfigurationsprogramm (3) bei jedem weiteren Start über die Netzwerkeinrichtung (10) eine Verbindung zu dem zentralen Datenbanksystem (11) aufbaut und die bei dem ersten Start benutzte Benutzerkennung automatisch dem Datenbanksystem (11) übermittelt
- das Datenbanksystem (11) daraufhin eine eventuell vorliegende neuere Version der benutzerspezifische Konfigurationsdatei (12) an das Konfigurationsprogramm (3) übermittelt,
- das Konfigurationsprogramm (3) die in der neueren Version der Konfigurationsdatei (12) benannten und noch nicht installierten Softwareprodukte von dem besagten Massenspeicher (7) installiert und gegebenenfalls mit angegebenen Parametern konfiguriert,
- das Konfigurationsprogramm (3) die in der neueren Version der Konfigurationsdatei (12) benannten und bereits installierten Softwareprodukte mit Hilfe der Installationspakete (2) und gegebenenfalls neu angegebenen Parametern re-konfiguriert, und
- das Konfigurationsprogramm (3) die in der neueren Version der Konfigurationsdatei (12) nicht benannten und bereits installierten Softwareprodukte deinstalliert.

10. Verfahren nach einem der Ansprüche 1 bis 9, **dadurch gekennzeichnet, dass**
bei der Vorbereitung der Computer (5,6) solche Softwareprodukte, die bei jeder benutzerspezifischen Konfiguration zur Installation vorgesehen sind, nicht als Installationspakete (2) auf den Massenspeicher (7) eines jeden Computers (5,6) übertragen werden, sondern bereits vorinstalliert werden.

11. Verfahren nach Anspruch 10, **dadurch gekennzeichnet, dass** zur Vorinstallation ein Abbild eines installierten Systems auf den Massenspeicher (7) eines jeden Computers (5,6) übertragen wird.

## Claims

1. Method for the user-specific configuration of a computer (5) from a group (4) of prepared computers, each computer (5, 6) respectively having a mass memory (7) and a network device (8), and
- each computer (5, 6) in the group (4) being prepared by transmitting all of the installation packages (2) for a predetermined set of software products and a configuration program (3) to the mass memory (7) of the computer (5, 6),
- a database system (11) containing user-specific configuration files (12) being provided, said configuration files mentioning a subselection of software products from the predetermined set and, if appropriate, specifying a list of parameters needed for the user-specific configuration of the software products,
**characterized in that**
- after the computer (5) has been installed at an intended working location, one of the user-specific configuration files (12) is transmitted to the configuration program (3), and
- the configuration program (3) installs the software products mentioned in the transmitted configuration file (12) using the installation packages (2) from said mass memory (7) and, if appropriate, configures them using the specified parameters.

2. Method according to Claim 1, **characterized in that**
- after it has been started, the configuration program (3) uses the network device (8) to establish a connection to the database system (11) ,
- the configuration program (3) asks the user for a user identifier and forwards the latter to the database system (11), and
- the database system (11) then uses the user identifier to transmit the user-specific configuration file (12) to the configuration program (3) via the network device (8).

3. Method according to Claim 1, **characterized in that**
- the user-specific configuration file (12) is transmitted by the database system (11) on a portable data storage medium (floppy disk, CD or the like),
- after it has been started, the configuration program (3) asks the user to insert the portable data storage medium, and
- the configuration program (3) takes the user-specific configuration file (12) from the portable data storage medium.

4. Method according to one of Claims 1 to 3, **characterized in that**
the configuration program (3) of the computer (5) is set up in such a manner that it automatically starts after the computer (5) has been switched on.

5. Method according to one of Claims 1 to 4, **characterized in that**,
after the software products mentioned in the configuration file (12) have been installed, the configuration program (3) removes all of the installation packages (2) from the mass memory (7) of the computer (5).

6. Method according to one of Claims 1 to 4, **characterized in that**,
after the software products mentioned in the configuration file (12) have been installed, the configuration program (3) removes the installation packages (2) for these software products from the mass memory (7) of the computer (5).

7. Method according to Claim 4, **characterized in that**,
when it is executed for the first time, the configuration program (3) changes its settings in such a manner that it no longer automatically starts after the computer (5) has been switched on.

8. Method according to one of Claims 1 to 7, **characterized in that**,
after the software products mentioned in the configuration file (12) have been installed, the configuration program (3) is erased from the mass memory (7) of the computer (5).

9. Method according to one of Claims 1, 2 or 4 to 6, **characterized in that**
- upon each further start, the configuration program (3) uses the network device (10) to establish a connection to the central database system (11) and automatically transmits the user identifier used during the first start to the database system (11),
- the database system (11) then transmits a newer version (if available) of the user-specific configuration file (12) to the configuration program (3),
- the configuration program (3) installs the software products which are mentioned in the newer version of the configuration file (12) and have not yet been installed from said mass memory (7) and, if appropriate, configures them using specified parameters,
- the configuration program (3) uses the installation packages (2) and, if appropriate, newly specified parameters to reconfigure the software products which are mentioned in the newer version of the configuration file (12) and have already been installed, and
- the configuration program (3) uninstalls the software products which are not mentioned in the newer version of the configuration file (12) and have already been installed.

10. Method according to one of Claims 1 to 9, **characterized in that**,
when preparing the computers (5, 6), those software products which are intended to be installed during each user-specific configuration are not transmitted to the mass memory (7) of each computer (5, 6) in the form of installation packages (2) but have already been preinstalled.

11. Method according to Claim 10, **characterized in that**
a replica of an installed system is transmitted to the mass memory (7) of each computer (5, 6) for the purpose of preinstallation.

## Revendications

1. Procédé de configuration, spécifique à un utilisateur d'un ordinateur (5) parmi un groupe (4) d'ordinateurs préparés, chaque ordinateur (5, 6) présentant respectivement une mémoire de masse (7) et un équipement de réseau (8) et
- chaque ordinateur (5, 6) du groupe (4) étant préparé en ce que tous les paquets d'installation (2) d'une quantité prédéfinie de produits logiciels ainsi qu'un programme de configuration (3) sont transmis sur la mémoire de masse (7) de l'ordinateur (5, 6),
- un système de base de données (11) étant présent, lequel contient des fichiers de configuration (12) spécifiques à l'utilisateur dans lesquels est mentionnée une sous-sélection des produits logiciels parmi la quantité prédéfinie et dans lesquels est éventuellement indiquée une liste de paramètres qui est nécessaire pour la configuration spécifique à l'utilisateur des produits logiciels,
**caractérisé en ce que**
- après avoir installé l'ordinateur (5) sur un poste de travail prévu, l'un des fichiers de configuration (12) spécifiques à l'utilisateur est transmis au programme de configuration (3) et
- le programme de configuration (3) installe les produits logiciels mentionnés dans le fichier de configuration (12) transmis à l'aide des paquets d'installation (2) de ladite mémoire de masse (7) et, le cas échéant, les configure avec les paramètres indiqués.

2. Procédé selon la revendication 1, **caractérisé en ce que**
- le programme de configuration (3), après son démarrage, établit une liaison avec le système de base de données (11) par le biais de l'équipement de réseau (8),
- le programme de configuration (3) demande un identifiant d'utilisateur à l'utilisateur et le transmet au système de base de données (11) et
- le système de base de données (11), à l'aide de l'identifiant d'utilisateur, communique ensuite le fichier de configuration (12) spécifique à l'utilisateur au programme de configuration (3) par le biais de l'équipement de réseau (8).

3. Procédé selon la revendication 1, **caractérisé en ce que**
- le fichier de configuration (12) spécifique à l'utilisateur est transmis sur un support de données amovible (disquette, CD ou similaire) par le système de base de données (11),
- le programme de configuration (3), après son démarrage, demande à l'utilisateur d'insérer le support de données amovible et
- le programme de configuration (3) prélève le fichier de configuration (12) spécifique à l'utilisateur du support de données amovible.

4. Procédé selon l'une des revendications 1 à 3, **caractérisé en ce que** le programme de configuration (3) de l'ordinateur (5) est paramétré de telle sorte qu'il démarre automatiquement après la mise en marche de l'ordinateur (5).

5. Procédé selon l'une des revendications 1 à 4, **caractérisé en ce que** le programme de configuration (3) supprime tous les paquets d'installation (2) de la mémoire de masse (7) de l'ordinateur (5) après l'installation réussie des produits logiciels mentionnés dans le fichier de configuration (12).

6. Procédé selon l'une des revendications 1 à 4, **caractérisé en ce que** le programme de configuration (3), après l'installation réussie des produits logiciels mentionnés dans le fichier de configuration (12), supprime les paquets d'installation (2) de ces produits logiciels de la mémoire de masse (7) de l'ordinateur (5).

7. Procédé selon la revendication 4, **caractérisé en ce que** le programme de configuration (3), lors de sa première exécution, modifie ses paramètres de telle sorte qu'il ne démarre plus automatiquement après la mise en marche de l'ordinateur (5).

8. Procédé selon l'une des revendications 1 à 7, **caractérisé en ce que** le programme de configuration (3) s'efface lui-même de la mémoire de masse (7) de l'ordinateur (5) après l'installation réussie des produits logiciels mentionnés dans le fichier de configuration (12).

9. Procédé selon l'une des revendications 1, 2 ou 4 à 6, **caractérisé en ce que**
- le programme de configuration (3) établit à chaque nouveau démarrage une liaison avec le système de base de données central (11) par le biais de l'équipement de réseau (10) et communique automatiquement au système de base de données (11) l'identifiant d'utilisateur employé lors du premier démarrage,
- le système de base de données (11) communique ensuite au programme de configuration (3) une version plus récente éventuellement présente du fichier de configuration (12) spécifique à l'utilisateur,
- le programme de configuration (3) installe à partir de ladite mémoire de masse (7) les produits logiciels mentionnés dans la version plus récente du fichier de configuration (12) et pas encore installés et les configure éventuellement avec les paramètres indiqués,
- le programme de configuration (3) reconfigure les produits logiciels mentionnés dans la version plus récente du fichier de configuration (12) et déjà installés à l'aide des paquets d'installation (2) et éventuellement avec les nouveaux paramètres indiqués et
- le programme de configuration (3) désinstalle les produits logiciels non mentionnés dans la version plus récente du fichier de configuration (12) et déjà installés.

10. Procédé selon l'une des revendications 1 à 9, **caractérisé en ce que** lors de la préparation de l'ordinateur (5, 6), les produits logiciels dont l'installation est prévue à chaque configuration spécifique à l'utilisateur ne sont pas transmis sous la forme de paquets d'installation (2) à partir de la mémoire de masse (7) de chaque ordinateur (5, 6), mais sont déjà préinstallés.

11. Procédé selon la revendication 10, **caractérisé en ce qu'**une reproduction d'un système installé est transmis sur la mémoire de masse (7) de chaque ordinateur (5, 6) pour la préinstallation.
